# FASCICULE DE BREVET EUROPEEN

(11) **EP 0 429 383 B1**
(45) Date de publication et mention de la délivrance du brevet: **01.03.1995**
(21) Numéro de dépôt: 90440108.0
(22) Date de dépôt: 22.11.1990
(51) Int. Cl.: A01D 43/10, A01D 67/00

(54) **Faucheuse avec dispositif d'allègement perfectionné**
Mähmaschine mit verbesserter Entlastungsvorrichtung
A mower having a lightening mechanism

(30) Priorité: 24.11.1989 FR 8915686
(43) Date de publication de la demande: 29.05.1991
(73) Titulaire: KUHN S.A., F-67700 Saverne (FR)
(72) Inventeur: Helfer, Roland, F-67450 Lampertheim (FR); Wattron, Bernard, F-67700 Haegen (FR)

(56) Documents cités:
- EP-A- 0 382 666
- EP-A- 0 406 961
- FR-A- 2 608 362
- FR-A- 2 614 755
- FR-B- 2 110 911
- GB-A- 1 583 983
- GB-A- 2 053 645
- NL-A- 8 701 155
- US-A- 4 719 742
- US-A- 4 724 661
- Prospectus Fahr KM40
- Photos faucheuse frontale Lely

## Description

La présente invention concerne une faucheuse comportant :
- un châssis,
- un moyen de liaison liant ledit châssis à un véhicule moteur,
- au moins un mécanisme de récolte muni d'organes de coupe,
- un dispositif de suspension liant ledit mécanisme de récolte au châssis et agencé de manière à tirer ledit mécanisme de récolte suivant le sens d'avance au travail et autorisant un déplacement en hauteur dudit mécanisme de récolte par rapport audit châssis,
et
- un dispositif d'allégement associé audit mécanisme de récolte, comportant au moins un ressort lié directement audit mécanisme de récolte et dont l'effort d'allégement peut être modulé.

Il est connu dans l'état de la technique une faucheuse traînée (FR-A-2 614 755). Celle-ci comporte un châssis qui s'étend transversalement à la direction d'avance au travail. A chacune de ses extrémités, ce châssis est muni d'une roue par l'intermédiaire desquelles il repose sur le sol. Le châssis est muni d'un timon qui permet d'atteler la faucheuse à un tracteur et qui est lié au châssis par une articulation d'axe dirigé au moins sensiblement verticalement. Le châssis supporte une barre de coupe au moyen d'un dispositif de suspension à parallélogramme déformable tiré. Ce dispositif comporte deux paires de bielles s'étendant chacune près d'une extrémité du châssis, respectivement de la barre de coupe. Entre la barre de coupe et le châssis s'étend par ailleurs un dispositif d'allégement de ladite barre de coupe. Ce dispositif d'allégement comporte deux ressorts de traction s'étendant chacun près d'une extrémité du châssis, respectivement de la barre de coupe, derrière la paire de bielles correspondante du dispositif de suspension à parallélogramme déformable. Chaque ressort de traction est lié directement à la barre de coupe derrière les organes de coupe et légèrement au-dessus du plan de coupe. Cette liaison est réalisée au moyen d'un tourillon articulé à une patte solidaire de la barre de coupe et fixé à une pièce de liaison solidaire dudit ressort. A son autre extrémité longitudinale supérieure, le ressort est lié au châssis au moyen d'une vis traversant une patte solidaire du châssis et vissée dans une autre pièce de liaison du ressort. En vissant plus ou moins profondément la vis dans cette autre pièce de liaison du ressort, on allonge plus ou moins le ressort, ce qui permet de régler l'allégement souhaité à l'extrémité correspondante de la barre de coupe. Grâce au dispositif de suspension à parallélogramme déformable, la barre de coupe peut se déplacer en hauteur par rapport au châssis afin de s'adapter aux configurations du terrain et passer par-dessus les obstacles que peut présenter ce dernier. Le dispositif d'allégement, quant à lui, permet de diminuer la pression avec laquelle la barre de coupe repose sur le sol, en reportant une partie du poids de celle-ci sur le châssis. Grâce à ce dispositif, la barre de coupe passe plus aisément par-dessus les obstacles que présente le terrain. Etant donné que la barre de coupe repose moins lourdement sur le sol, il en découle également une diminution de la puissance nécessaire au déplacement de la faucheuse et des risques d'accumulations de terre à la partie frontale de la barre de coupe.

Le dispositif d'allégement et le dispositif de suspension de cette faucheuse connue présentent deux avantages importants : d'une part, les ressorts sont directement liés à la barre de coupe, ce qui permet au dispositif d'allégement de travailler avec des temps de réponse extrêmement courts et, d'autre part, le dispositif de suspension tire la barre de coupe suivant le sens de travail, laquelle s'adapte donc aisément au relief du sol et est peu sensible aux obstacles et aux creux.

En pratique, il s'est cependant avéré que ce dispositif d'allégement n'est pas optimal. En effet, compte tenu des tolérances usuelles de fabrication des ressorts, des variations des caractéristiques du métal dues aux traitements thermiques, de l'importance de la précontrainte, etc., des ressorts répondant dimentionnellement à un plan donné peuvent avoir des caractéristiques qui diffèrent dans des proportions appréciables. Il peut en conséquence arriver très fréquemment que les deux extrémités du mécanisme de récolte reposent avec des pressions différentes sur le sol. Le système de réglage de la tension de chaque ressort permet bien d'égaliser théoriquement les pressions avec lesquelles les extrémités du mécanisme de récolte reposent sur le sol. Ceci nécessiterait cependant un dispositif de mesure que l'utilisateur ne possède en général pas. De plus, lorsqu'une des extrémités du mécanisme de récolte se déplace en hauteur par rapport à l'autre, les deux extrémités dudit mécanisme de récolte reposent également avec des pressions différentes sur le sol.

En pratique, on constate donc que le mécanisme de récolte est souvent très imparfaitement allégé.

La présente invention a pour objectif de créer une faucheuse dont le dispositif d'allégement soit aisément réglable et allège mieux le mécanisme de récolte, tout en conservant le double avantage de ladite faucheuse connue.

A cet effet, la faucheuse selon la présente invention est caractérisée en ce que le dispositif d'allégement s'étend au moins sensiblement dans le voisinage du plan vertical dirigé suivant la direction d'avance au travail et contenant le centre des masses dudit mécanisme de récolte, et que ledit dispositif d'allégement comporte un dispositif de réglage central de la force d'allègement exercée sur ledit mécanisme de récolte.

Du fait que le dispositif d'allégement s'étend au moins sensiblement dans le voisinage du plan vertical dirigé suivant la direction d'avance au travail et contenant le centre des masses du mécanisme de récolte, les pressions avec lesquelles les deux extrémités du mécanisme de récolte reposent sur le sol sont égales ou tout au moins très proches l'une de l'autre.

Etant donné que le dispositif d'allégement comporte en sus un dispositif de réglage central de la force d'allégement, le réglage est plus simple et plus rapide tout en garantissant que les extrémités du mécanisme de récolte reposent sur le sol avec des pressions égales ou tout au moins très proches l'une de l'autre.

Selon une caractéristique supplémentaire de l'invention, il est prévu que le dispositif d'allégement s'étende derrière les organes de coupe et soit lié audit mécanisme de récolte dans le voisinage du plan de coupe desdits organes de coupe. Grâce à cette caractéristique, le (lesdits) ressort(s) du dispositif d'allégement peut (peuvent) avoir une grande longueur. De ce fait, son (leur) diagramme de déformation est relativement plat. Il(s) autorise(nt) en conséquence un grand déplacement en hauteur du mécanisme de récolte par rapport au châssis.

Pour éviter que du produit coupé n'arrive dans la zone du dispositif d'allégement et ne reste accroché à celui-ci, une solution avantageuse consiste à prévoir que devant le dispositif d'allégement ledit mécanisme de récolte soit pourvu de deux rotors tournant chacun autour d'un axe dirigé vers le haut et de telle sorte que leurs sens de rotation respectifs divergent vers l'avant.

Selon une autre caractéristique supplémentaire de l'invention, il est prévu que ledit mécanisme de récolte comporte une barre de coupe munie desdits organes de coupe et glissant sur le sol durant le travail. Dans ce cas, le dispositif d'allégement permet de réduire les risques d'accumulation de terre à la partie frontale de ladite barre de coupe.

Préférentiellement, les organes de coupe sont des organes de coupe rotatifs tournant autour d'axes dirigés vers le haut. Lors de leur rotation, ces organes de coupe s'étendent généralement au-delà de l'extrémité arrière du carter de ladite barre de coupe.

Selon une autre caractéristique supplémentaire de l'invention, il est également prévu que le dispositif d'allégement soit lié à la barre de coupe au moyen d'un élément d'accouplement s'étendant dans le voisinage du plan de coupe des organes de coupe. Une réalisation intéressante est obtenue, lorsque l'élément d'accouplement s'étend légèrement en-dessous dudit plan de coupe.

Pour des faucheuses de largeur de travail relativement grande, il est avantageux que leur barre de coupe soit réalisée en deux parties de barre de coupe accouplées l'une à l'autre au moyen dudit élément d'accouplement.

Afin de permettre à l'élément d'accouplement de bien absorber les efforts exercés par le dispositif d'allégement, il peut être prévu dans l'invention que ledit élément d'accouplement soit rigidifié au moyen d'un organe de rigidification.

Avantageusement, l'organe de rigidification s'étendra vers l'avant et vers le haut.

Il est connu que ledit mécanisme de récolte comporte des éléments porteurs s'étendant au-dessus desdits organes de coupe. Dans ce cas, l'organe de rigidification sera préférentiellement implanté entre l'élément d'accouplement et lesdits éléments porteurs. On forme ainsi une triangulation qui confère à l'élément d'accouplement une grande rigidité.

En particulier, il sera prévu que l'organe de rigidification soit lié d'une part aux éléments porteurs au moyen d'une première articulation s'étendant au-dessus des organes de coupe, et d'autre part à l'élément d'accouplement au moyen d'une deuxième articulation.

Selon une autre caractéristique supplémentaire de l'invention, il est prévu que le dispositif d'allégement soit lié audit mécanisme de récolte par une articulation, de préférence cylindrique, d'axe au moins sensiblement horizontal et au moins sensiblement perpendiculaire à la direction d'avance au travail. Ce type de liaison entraîne d'une part des temps de réponse encore plus courts et évite d'autre part, dans le cas de ressorts de traction, la flexion de ces derniers.

Dans un tel agencement, il pourra être avantageusement prévu que la deuxième articulation au moyen de laquelle l'organe de rigidification est lié à l'élément d'accouplement, soit au moins sensiblement confondue avec ladite articulation.

Selon une autre caractéristique supplémentaire de l'invention, il est prévu que la direction de la force d'allégement exercée par le dispositif d'allégement sur ledit mécanisme de récolte soit au moins sensiblement tangente à la trajectoire décrite par le point de liaison liant le dispositif d'allégement audit mécanisme de récolte lors de son déplacement en hauteur autorisé par le dispositif de suspension.

Selon une autre caractéristique supplémentaire de l'invention, il est prévu que le dispositif de suspension comporte au moins un organe de suspension liant ledit mécanisme de récolte au châssis et s'étendant sensiblement dans le voisinage du plan vertical contenant le centre des masses dudit mécanisme de récolte. Avantageusement, le dispositif de suspension peut comporter au moins deux organes de suspension liés à la partie frontale dudit mécanisme de récolte et s'étendant sensiblement dans le voisinage dudit plan vertical.

Selon une autre caractéristique supplémentaire de l'invention, le dispositif d'allégement comporte un groupe de ressorts dont une partie s'étend d'un côté du plan vertical dirigé suivant la direction d'avance au travail et contenant le centre des masses dudit mécanisme de récolte, et dont l'autre partie s'étend de l'autre côté dudit plan. Préférentiellement, il est prévu que ces deux parties soient identiques. Préférentiellement, il est également prévu qu'elles s'étendent au moins sensiblement symétriquement par rapport audit plan.

En cas de dispersion des caractéristiques des ressorts, il apparaît que la différence des efforts exercés par les deux parties du groupe de ressorts n'est pas reportée intégralement aux extrémités du mécanisme de récolte reposant sur le sol durant le travail, mais minimisée dans le rapport "a/l" dans lequel "a" représente la distance entre les deux parties du groupe de ressorts et "l" la largeur du mécanisme de récolte.

Selon une autre caractéristique supplémentaire de l'invention, il est prévu que tous les ressorts du groupe soient liés à une pièce de liaison commune elle-même liée au châssis au moyen dudit dispositif de réglage permettant d'approcher ou d'éloigner ladite pièce de liaison commune dudit châssis.

Dans une réalisation particulièrement avantageuse, il est prévu que le dispositif de réglage comprend notamment un dispositif à vis et écrou. La vis s'étend au moins sensiblement parallèlement aux ressorts et est liée au châssis. Elle est par ailleurs vissée dans un écrou lié à la pièce de liaison commune. Afin d'éviter des flexions dans les ressorts ou dans la vis lorsque le mécanisme de récolte se déplace en hauteur par rapport au châssis pour suivre la configuration du sol, il est prévu que la vis comporte une face d'appui sphérique destinée à venir en contact avec une face d'appui du châssis également sphérique. Du reste, il est également prévu que l'écrou comporte aussi une face d'appui sphérique destinée à venir en contact avec une face d'appui sphérique de la pièce de liaison commune. Cette dernière face d'appui sphérique dont la concavité est dirigée vers le bas, entoure un trou circulaire situé au milieu de la pièce de liaison commune, lequel est traversé par la vis. Cette articulation a pour effet, lors de l'inclinaison dudit mécanisme de récolte par rapport au châssis, transversalement à la direction d'avance au travail, de permettre à la pièce de liaison commune de pivoter pour égaliser sensiblement les efforts créés par les deux parties du groupe de ressorts sur ledit mécanisme de récolte.

Selon une autre caractéristique supplémentaire de l'invention, ledit mécanisme de récolte comprend des éléments d'entraînement qui comportent notamment un arbre d'entrée recevant le mouvement au moyen d'un arbre de transmission télescopique à joints universels, qui passe entre les deux parties du groupe de ressorts.

Selon une autre caractéristique supplémentaire de l'invention, le (les) ressort(s) est (sont) un (des) ressort(s) de traction.

Selon une autre caractéristique supplémentaire de l'invention, ledit mécanisme de récolte comporte en sus des organes de traitement du produit coupé par les organes de coupe qui s'étendent derrière lesdits organes de coupe.

Avantageusement, il est prévu que lesdits organes de traitement comportent deux groupes d'organes de traitement s'étendant de part et d'autre du plan vertical médian dudit mécanisme de récolte dirigé suivant la direction d'avance au travail. Préférentiellement d'ailleurs, il sera prévu que ces deux groupes d'organes de traitement s'étendent au moins sensiblement symétriquement par rapport audit plan.

Le dispositif d'allégement dudit mécanisme de récolte pourra ainsi s'étendre entre ces deux groupes d'organes de traitement.

Avantageusement, ces organes de traitement pourront être des organes de conditionnement du produit coupé par les organes de coupe.

D'autres caractéristiques de l'invention apparaissent dans la description suivante d'un exemple non limitatif de réalisation de l'invention faite en référence au dessin annexé sur lequel :
- la figure 1 représente une vue de dessus d'une faucheuse selon l'invention attelée à un tracteur agricole.
- la figure 2 représente une vue latérale du corps de ladite faucheuse.
- la figure 3 représente une vue de dessus partielle, à une échelle agrandie, de la partie médiane du corps de la faucheuse représentée sur la figure 1, une partie de l,élément médian du châssis ayant été partiellement retirée.
- la figure 4 représente une coupe partielle du corps de la faucheuse suivant le plan IV-IV.

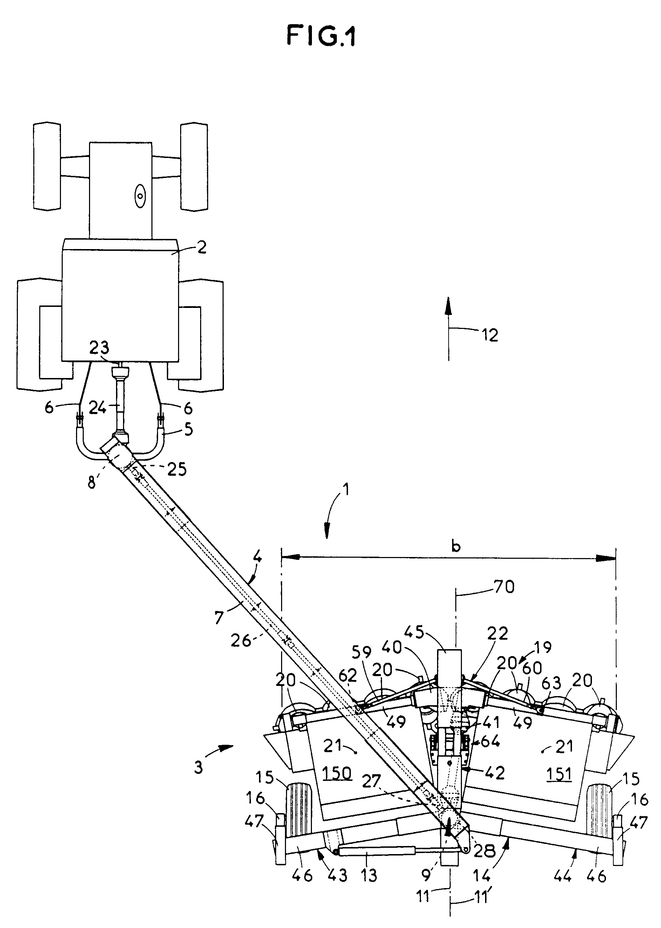

La figure 1 montre une faucheuse (1) selon l'invention. Celle-ci est attelée à un tracteur agricole (2).

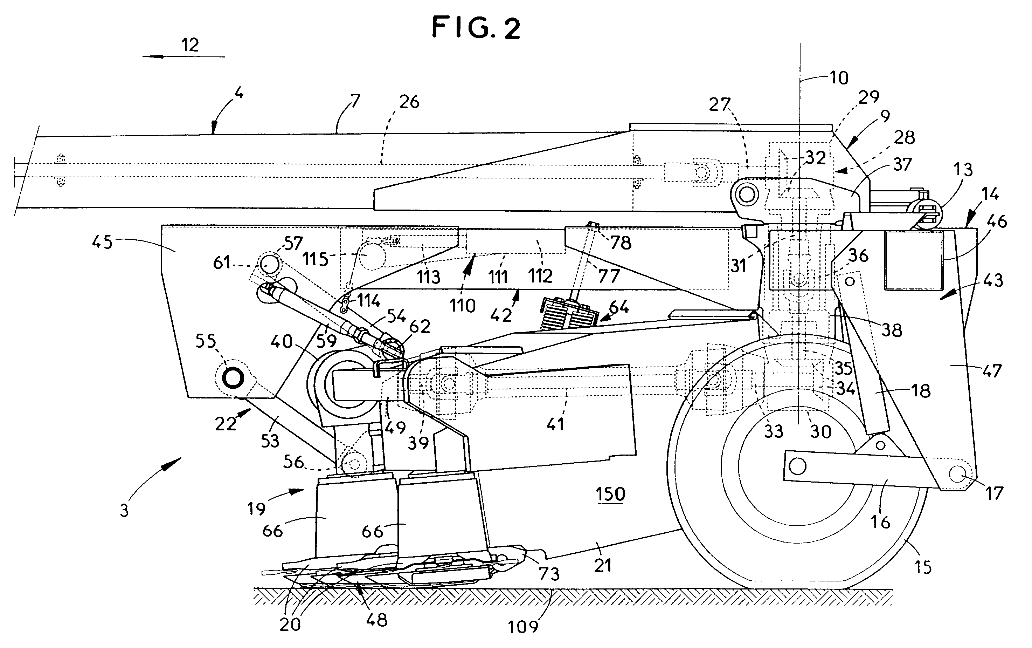

Elle se compose d'un corps (3) et d'un timon (4). Le timon (4), quant à lui, se compose d'un timon primaire (5) destiné à être attelé aux bras inférieurs (6) de l'attelage du tracteur agricole (2) et d'un timon secondaire (7) lié au corps (3) de la faucheuse (1). Le timon primaire (5) est lié à l'extrémité frontale du timon secondaire (7) au moyen d'un dispositif de liaison (8) connu de l'homme de l'art et qui autorise notamment un pivotement du timon primaire (5) par rapport au timon secondaire (7) autour d'un axe au moins sensiblement vertical. Près de son extrémité arrière, le timon secondaire (7) est lié au corps (3) au moyen d'une articulation (9) d'axe géométrique (10) (voir figure 2) au moins sensiblement vertical et s'étendant au moins sensiblement dans le plan vertical médian (11) du corps (3), dirigé suivant la direction d'avance (12) au travail. La position angulaire du timon (4) par rapport au corps (3) peut être modifiée en faisant pivoter le timon (4) autour de l'axe (10) de l'articulation (9). La mise en position angulaire souhaitée et le maintien dans celle-ci sont réalisés par un vérin hydraulique (13). Grâce à cet agencement, le corps (3) de la faucheuse (1) peut, notamment au travail, s'étendre -vu de l'arrière dans la direction d'avance (12) au travail- soit à droite, soit à gauche du tracteur agricole (2). Ceci autorise le fauchage en aller et retour.

Le corps (3) de la faucheuse (1) comporte un châssis (14) qui s'appuie sur le sol -notamment au travail- au moyen de deux roues (15) qui s'étendent chacune près d'une extrémité extérieure respective dudit châssis (14). Chaque roue (15) est liée au châssis (14) au moyen d'un bras de roue (16) lui-même lié audit châssis (14) au moyen d'une articulation du type pivot (17) d'axe géométrique dirigé au moins sensiblement perpendiculairement à la direction d'avance (12) au travail. Les axes géométriques des articulations (17) des deux roues (15) sont au moins sensiblement confondus. Entre chaque bras de roue (16) et le châssis (14) est par ailleurs prévu un vérin hydraulique (18) qui permet de faire pivoter le bras de roue (16) et la roue (15) correspondante par rapport au châssis (14) autour de l'axe géométrique de l'articulation (17) correspondante. Ceci permet au châssis (14) d'être approché du sol (109) pendant la phase de fauchage et d'être éloigné du sol (109) lorsque le fauchage est interrompu.

Le corps (3) de la faucheuse (1) comporte, par ailleurs, un groupe d'organes de travail qui est ici constitué par un mécanisme de récolte (19) muni d'organes de coupe (20) et d'organes de traitement (21) du produit coupé par les organes de coupe (20), tels que des organes de conditionnement par exemple. Ce mécanisme de récolte (19) est lié au châssis (14) au moyen d'un dispositif de suspension (22) et d'un dispositif d'allégement (64), qui seront décrits ultérieurement.

L'entraînement du mécanisme de récolte (19) est réalisé à partir de la prise de force (23) du tracteur (2) qui attaque, par l'intermédiaire d'un arbre télescopique à joints universels (24) l'arbre d'entrée (non représenté) du dispositif de liaison (8) qui est également, d'une manière connue de l'homme de l'art, un dispositif de transmission du mouvement. L'arbre de sortie (25) du dispositif de liaison et de transmission (8) transmet le mouvement à un arbre de transmission (26) qui est logé à l'intérieur du timon secondaire (7). L'arbre de transmission (26) est lié en rotation à l'arbre d'entrée (27) d'un carter intermédiaire (28) qui s'étend au niveau de la liaison du timon secondaire (7) au châssis (14). Ce carter intermédiaire (28) (voir figure 2) se compose de deux parties : une partie supérieure (29) solidaire du timon secondaire (7) et une partie inférieure (30) solidaire du châssis (14). La partie supérieure (29) supporte d'une part l'arbre d'entrée (27) et d'autre part un arbre de sortie intermédiaire (31). Ces deux arbres (27, 31) sont liés en rotation au moyen d'un couple de roues dentées coniques (32) logé dans la partie supérieure (29). La partie inférieure (30), quant-à-elle, supporte d'une part un arbre d'entrée intermédiaire (35) et d'autre part un arbre de sortie (33). Les deux arbres (35, 33) sont liés en rotation au moyen d'un couple de roues dentées coniques (34) logé dans la partie inférieure (30). Par ailleurs, l'arbre de sortie intermédiaire (31) et l'arbre d'entrée intermédiaire (35) sont accouplés l'un à l'autre au moyen d'un joint universel (36). Enfin, ces deux arbres intermédiaires (31, 35) sont agencés de telle manière que leurs axes de rotation respectifs soient confondus avec l'axe géométrique (10) de l'articulation (9) par l'intermédiaire de laquelle le timon (4) est lié au châssis (14) du corps (3). Cette articulation (9) est réalisée de la manière suivante. A son extrémité arrière, le timon secondaire (7) est muni d'un moyeu (37) centré sur l'axe géométrique (10) et s'étendant vers le bas. Ce moyeu (37) est guidé en rotation dans un palier (38) également centré sur l'axe géométrique (10) et solidaire du châssis (14). Le guidage en rotation du moyeu (37) dans le palier (38), de même que la liaison axiale dudit moyeu (37) et dudit palier (38), n'ont pas été détaillés, car ceux-ci sont à la portée de l'homme de l'art. L'arbre de sortie (33) de la partie inférieure (30) du carter intermédiaire (28) attaque l'arbre d'entrée (39) du carter d'entrée (40) du mécanisme de récolte (19) au moyen d'un arbre de transmission télescopique à joints universels (41).

Sur la figure 1 apparaît également très précisément la forme du châssis (14). Celui-ci se compose pour l'essentiel d'un élément médian (42) et de deux éléments latéraux (43, 44) s'étendant chacun d'un côté respectif dudit élément médian (42). L'élément médian (42) se compose principalement du palier (38) et d'une console (45) qui s'étend au moins sensiblement horizontalement et au moins sensiblement suivant la direction d'avance (12) au travail. Ladite console (45) est avantageusement liée rigidement, mais néanmoins de manière amovible, au palier (38). Les éléments latéraux (43, 44), quant-à-eux, sont chacun constitués par une poutre (46) s'étendant au moins sensiblement horizontalement et transversalement à la direction d'avance (12) au travail, et à l'extrémité extérieure de laquelle, c'est-à-dire l'extrémité éloignée du palier (38), est fixée une jambe (47) s'étendant vers le bas. C'est à l'extrémité inférieure de cette jambe (47) qu'est lié le bras de roue (16) de la roue (15) correspondante. Chaque élément latéral (43, 44) est également lié rigidement et de manière amovible au palier (38).

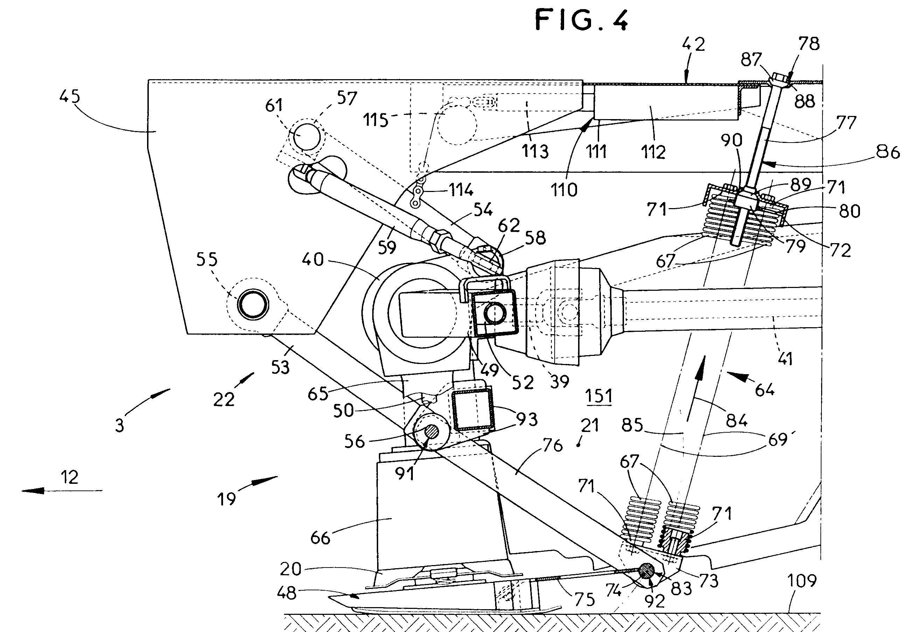

Sur les figures 1 et 2, il apparaît par ailleurs que le mécanisme de récolte (19) s'étend sous la console (45) de l'élément médian (42) du châssis (14) et transversalement à la direction d'avance au travail. Ce mécanisme de récolte (19) se compose pour l'essentiel d'une barre de coupe (48) supportant les organes de coupe (20), du carter d'entrée (40) et de deux structures porteuses (49) supportant notamment les organes de traitement (21). Le carter d'entrée (40) se situe plus précisément sous la console (45) et dans le plan vertical médian (11′) du mécanisme de récolte (19) dirigé suivant la direction d'avance (12) au travail. Dans l'exemple représenté, ledit plan vertical médian (11′) est confondu avec le plan vertical médian (11) du corps (3). De part et d'autre de ce carter d'entrée (40) sont liées de façon amovible les deux structures porteuses (49) agencées symétriquement par rapport audit plan médian (11′). Ces structures porteuses (49) s'étendent au moins sensiblement horizontalement, et au moins approximativement parallèlement aux éléments latéraux (43, 44) du châssis (14). Les organes de traitement (21) sont répartis suivant deux groupes (150, 151) d'organes de traitement (21), chacun fixé à une structure porteuse (49) respective du mécanisme de récolte (19). Ils s'étendent derrière les organes de coupe (20) en vue du traitement du produit coupé par ces derniers. Les deux groupes d'organes de traitement (150, 151) sont, comme les structures porteuses (49), agencés symétriquement par rapport au plan médian (11′) du mécanisme de récolte (19). Sur les figures 1 et 4, il apparaît de plus que le mouvement de rotation transmis par l'arbre télescopique à joints universels (41) au carter d'entrée (40) du mécanisme de récolte (19) est ensuite communiqué à deux premiers arbres d'entraînement (50) dirigés vers le bas et à deux autres arbres d'entraînement (52) dirigés de part et d'autre dudit carter d'entrée (40). Les deux premiers arbres d'entraînement (50) traversent chacun un organe porteur central (65) respectif avant d'entraîner les organes de coupe (20) situés de part et d'autre du plan médian (11′). Les deux autres arbres d'entraînement (52) passent chacun à l'intérieur de la structure porteuse (49) respective du mécanisme de récolte (19) afin d'entraîner les organes de traitement (21) dudit mécanisme de récolte (19).

Le dispositif de suspension (22) comporte deux organes de suspension (53, 54) qui lient le mécanisme de récolte (19) au châssis (14). Le premier organe de suspension (53) est articulé par deux liaisons rotule (55, 56) d'une part à la console (45) du châssis (14) et d'autre part à une traverse (93) du mécanisme de récolte (19). Le deuxième organe de suspension (54) situé au-dessus du premier organe de suspension (53), s'articule à la console (45) du châssis (14) par une liaison pivot (57), ainsi qu'au carter d'entrée (40) du mécanisme de récolte (19) par une liaison rotule (58). Ces deux organes de suspension (53, 54) forment un parallélogramme déformable, au moins sensiblement vertical, permettant une bonne adaptation du mécanisme de récolte (19) au sol (109). Le présent dispositif de suspension (22) comporte également deux organes de suspension latéraux (59, 60). Chaque organe de suspension latéral (59, 60) est articulé par une liaison rotule (61) à la console (45) du châssis (14) et par une autre liaison rotule (62, 63) à la structure porteuse (49) respective du mécanisme de récolte (19). Ces deux organes de suspension latéraux (59, 60) sont agencés symétriquement de part et d'autre de la console (45) de façon à empêcher le pivotement du mécanisme de récolte (19) autour d'une droite passant par les centres des deux liaisons rotule (56, 58). De ce fait, le dispositif de suspension (22) autorise uniquement un déplacement du mécanisme de récolte (19) suivant une direction dirigée vers le haut, ainsi qu'une inclinaison dudit mécanisme de récolte (19) par rapport au châssis (14) transversalement à la direction d'avance (12) au travail.

Tel que visible sur les figures 2 et 4, la faucheuse (1) comporte encore un dispositif de relevage (110) du mécanisme de récolte (19). Ce dispositif se compose principalement d'un vérin hydraulique (111), dont le cylindre (112) est lié au châssis (14) et dont la tige (113) est liée à une chaîne (114). Cette chaîne (114) s'enroule partiellement sur une roue (115) guidée en rotation dans le châssis (14), et est liée à son extrémité éloignée du vérin hydraulique (111) au deuxième organe de suspension (54). Au travail, ce dispositif de relevage (110) ne gêne pas le déplacement du mécanisme de récolte (19) par rapport au châssis (14). Lorsque le mécanisme de récolte (19) doit être relevé, il suffira de faire rentrer la tige (113) dans le cylindre (112) du vérin hydraulique (111) en injectant du fluide dans celui-ci. Ce faisant, la tige (113) tire, via la chaîne (114), sur le deuxième organe de suspension (54), ce qui a pour effet de faire monter le mécanisme de récolte (19) par déformation du parallélogramme déformable.

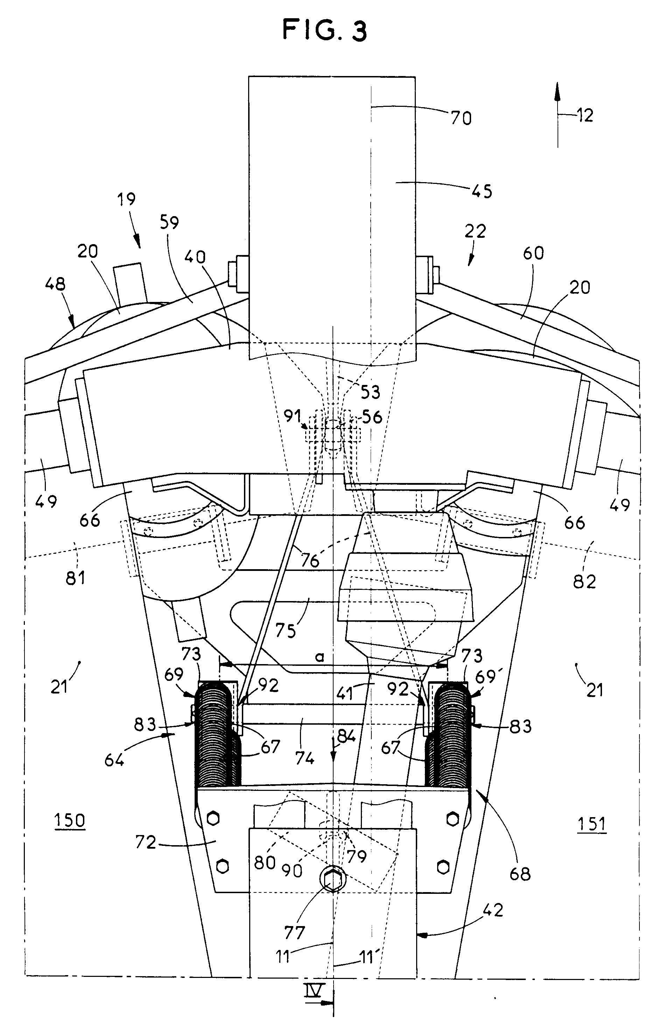

Un dispositif d'allégement (64) dont la structure apparaît en détail sur les figures 3 et 4, collabore avec le dispositif de suspension (22). Ce dispositif d'allégement (64) comporte un groupe (68) de quatre ressorts (67) de traction situé dans le voisinage du plan vertical (70) dirigé suivant la direction d'avance (12) au travail et contenant le centre des masses du mécanisme de récolte (19). On voit également que ledit dispositif d'allégement (64) s'étend entre les deux groupes (150, 151) d'organes de traitement (21) et juste derrière deux rotors (66) s'étendant l'un près de l'autre dans la partie médiane de la barre de coupe (48), symétriquement de part et d'autre du plan vertical médian (11') du mécanisme de récolte (19) et tournant chacun autour d'un axe dirigé vers le haut, de telle sorte que leurs sens de rotation respectifs divergent vers l'avant. Les axes géométriques de ces ressorts (67) de traction s'étendent parallèlement vers le haut et sont légèrement inclinés vers l'arrière par rapport à la direction d'avance (12) au travail. Ce groupe (68) de quatre ressorts (67) de traction est partagé en deux parties (69, 69') identiques comprenant chacune deux des quatre ressorts (67). Ces parties (69, 69') s'étendent sensiblement symétriquement de part et d'autre du plan vertical (70). Dans l'exemple représenté, ledit plan (70) est très proche du plan médian (11') du mécanisme de récolte (19). Du reste, dans chaque partie (69, 69'), les deux ressorts (67) s'étendent, compte tenu du sens d'avance (12) au travail, l'un derrière l'autre.

A l'intérieur de chacune des extrémités des ressorts (67) de traction est vissé un organe de liaison (71) liant l'extrémité supérieure respective de ces ressorts (67) à une pièce de liaison commune (72) et l'extrémité inférieure respective desdits ressorts (67) à deux chapes (73). Chaque chape (73) est fixée à une partie (69, 69') respective du groupe (68) des quatre ressorts (67) de traction et pivote sur un tourillon (74) d'axe géométrique au moins sensiblement horizontal et au moins sensiblement orthogonal à la direction d'avance (12) au travail. Ce tourillon (74) est lié rigidement au centre de la barre de coupe (48) par un élément d'accouplement (75) agencé de manière au moins sensiblement parallèle aux deux plans de coupe générés par les organes de coupe (20), dans le voisinage desdits plans. Les chapes (73) et le tourillon (74) constituent ainsi une articulation (83) par l'intermédiaire de laquelle le dispositif d'allégement (64) est lié au mécanisme de récolte (19). Deux éléments de rigidification (76) s'étendant vers l'avant et vers le haut, sont liés à leurs extrémités arrière à l'élément d'accouplement (75) au moyen d'une articulation (92) et à leur extrémité avant à la traverse (93) au moyen d'une articulation (91). Il apparaît du reste que l'articulation (92) est confondue avec l'articulation (83) liant le dispositif d'allégement (64) au mécanisme de récolte (19), et que l'articulation (91) est située au-dessus des organes de coupe (20). L'organe de rigidification ainsi constitué forme une triangulation destinée à augmenter la rigidité de l'élément d'accouplement (75) liant également entre-elles les deux parties de barre de coupe (81, 82) constituant la barre de coupe (48).

La pièce de liaison commune (72) réalisée à partir d'une plaque pliée en "U", est liée par sa face intérieure centrale aux organes de liaison (71) prévus aux extrémités supérieures des ressorts (67). Cette pièce de liaison commune (72) ainsi définie comporte en son milieu un trou circulaire entouré d'une face d'appui sphérique (90) dont la concavité est dirigée vers le bas. Ledit trou circulaire est traversé par une vis (77) liée au moyen d'une articulation (78) de type rotule à la console (45) du châssis (14). A cet effet, la vis (77) comporte une face d'appui sphérique (87) collaborant avec une face d'appui sphérique (88) de la console (45). Cette vis (77) s'étend au moins sensiblement parallèlement aux ressorts (67) et comporte un écrou (79) à face d'appui sphérique (89) collaborant avec la face d'appui sphérique (90) de la pièce de liaison commune (72). L'écrou (79) est également équipé d'une tôle rectangulaire (80), de longueur supérieure à la largeur de la pièce de liaison commune (72). De ce fait, la rotation de l'écrou (79) est empêchée par les rebords de la pièce de liaison commune (72) lors de la rotation de la vis (77).

Le dispositif de réglage (86) ainsi formé permet, en tournant la vis (77) dans un sens ou dans l'autre, de translater la pièce de liaison commune (72) et d'allonger plus ou moins les ressorts (67) afin de moduler l'allègement du mécanisme de récolte (19). En sus, lors de l'inclinaison du mécanisme de récolte (19) par rapport au châssis (14) transversalement à la direction d'avance (12) au travail, la liaison rotule entre l'écrou (79) et la pièce de liaison commune (72) permet par simple rotation de cette pièce de liaison commune (72) de rester sensiblement parallèle à l'élément d'accouplement (75). Grâce à ce système, les deux parties (69, 69') du groupe (68) de ressorts (67) conservent au moins sensiblement la même longueur. Ainsi, on n'engendre pas, lors de ladite inclinaison du mécanisme de récolte (19), de différence remarquable entre les délestages appliqués aux extrémités du mécanisme de récolte (19). La seconde liaison rotule (78) entre la vis (77) et la console (45) du châssis (14), assistée de la liaison pivot (83) entre le dispositif d'allégement (64) et le mécanisme de récolte (19) évitent la flexion du groupe (68) de ressorts (67), en gardant les axes des ressorts (67) toujours au moins sensiblement parallèles à l'axe de la vis (77) et cela durant tous les déplacements autorisés par le dispositif de suspension (22). Sur la figure 4, il apparaît aussi que la direction de la force d'allégement (84) exercée par le dispositif d'allégement (64) sur le mécanisme de récolte (19), est au moins sensiblement tangente à la trajectoire (85) décrite par l'articulation (83) liant le dispositif d'allègement (64) au mécanisme de récolte (19), lors de son déplacement en hauteur autorisé par le dispositif de suspension (22).

Comme visible sur les figures, il a également été prévu dans la faucheuse selon l'invention, que l'arbre de transmission télescopique à joints universels (41) qui s'étend suivant une direction au moins sensiblement parallèle à la direction d'avance (12) au travail, passe entre les deux parties (69, 69′) du groupe (68) de ressorts (67) de traction.

Différentes modifications restent possibles, notamment en ce qui concerne la constitution des divers éléments ou par substitution d'équivalents techniques, sans pour autant sortir du domaine de protection défini par les revendications. C'est ainsi notamment, que dans l'exemple de réalisation décrit, il est parfaitement possible de changer l'agencement, le type et le nombre des ressorts (67), dès lors qu'ils se situent au moins sensiblement dans le voisinage du plan vertical (70) contenant le centre des masses du mécanisme de récolte (19).

## Revendications

1. Faucheuse (1) comportant :
- un châssis (14),
- un moyen de liaison (4) liant ledit châssis (14) à un véhicule moteur (2),
- au moins un mécanisme de récolte (19) muni d'organes de coupe (20),
- un dispositif de suspension (22) liant ledit mécanisme de récolte (19) au châssis (14) et agencé de manière à tirer ledit le mécanisme de récolte (19) suivant le sens d'avance (12) au travail et autorisant un déplacement en hauteur dudit mécanisme de récolte (19) par rapport audit châssis (14),
et
- un dispositif d'allégement (64) associé audit mécanisme de récolte (19), comportant au moins un ressort (67) lié directement audit mécanisme de récolte (19) et dont l'effort d'allégement peut être modulé,
caractérisée en ce que ledit dispositif d'allégement (64) s'étend au moins sensiblement dans le voisinage du plan vertical (70) dirigé suivant la direction d'avance (12) au travail et contenant le centre des masses dudit mécanisme de récolte (19), et que ledit dispositif d'allégement (64) comporte un dispositif de réglage central (86) de la force d'allégement (84) exercée sur ledit mécanisme de récolte (19).

2. Faucheuse selon la revendication 1, caractérisée en ce que le dispositif d'allégement (64) s'étend derrière les organes de coupe (20) et est lié audit mécanisme de récolte (19) dans le voisinage du plan de coupe desdits organes de coupe (20).

3. Faucheuse selon la revendication 1 ou 2, caractérisée en ce que ledit mécanisme de récolte (19) est pourvu, devant le dispositif d'allégement (64), de deux rotors (66) tournant chacun autour d'un axe dirigé vers le haut et de telle sorte que leurs sens de rotation respectifs divergent vers l'avant.

4. Faucheuse selon l'une au moins des revendications 1 à 3, caractérisée en ce que ledit mécanisme de récolte (19) comporte une barre de coupe (48) munie desdits organes de coupe (20) et glissant sur le sol durant le travail.

5. Faucheuse selon la revendication 4, caractérisée en ce que les organes de coupe (20) sont des organes de coupe rotatifs tournant autour d'axes dirigés vers le haut.

6. Faucheuse selon la revendication 4 ou 5, caractérisée en ce que le dispositif d'allégement (64) est lié à la barre de coupe (48) au moyen d'un élément d'accouplement (75) s'étendant dans le voisinage du plan de coupe des organes de coupe (20).

7. Faucheuse selon la revendication 6, caractérisée en ce que la barre de coupe (48) est réalisée en deux parties de barre de coupe (81, 82) accouplées l'une à l'autre au moyen dudit élément d'accouplement (75).

8. Faucheuse selon la revendication 6 ou 7, caractérisée en ce que l'élément d'accouplement (75) est rigidifié au moyen d'un organe de rigidification (76).

9. Faucheuse selon la revendication 8, caractérisée en ce que l'organe de rigidification (76) s'étend vers l'avant et vers le haut.

10. Faucheuse selon la revendication 8 ou 9, caractérisée en ce que ledit mécanisme de récolte (19) comporte en sus des éléments porteurs (40, 65, 93, 49) s'étendant au-dessus desdits organes de coupe (20) et que l'organe de rigidification (76) est implanté entre l'élément d'accouplement (75) et lesdits éléments porteurs (40, 65, 93, 49).

11. Faucheuse selon la revendication 10, caractérisée en ce que l'organe de rigidification (76) est lié d'une part aux éléments porteurs (40, 65, 93, 49) au moyen d'une première articulation (91) s'étendant au-dessus des organes de coupe (20) et d'autre part à l'élément d'accouplement (75) au moyen d'une deuxième articulation (92).

12. Faucheuse selon l'une au moins des revendications 1 à 11, caractérisée en ce que le dispositif d'allégement (64) est lié audit mécanisme de récolte (19) au moyen d'une articulation (83), de préférence cylindrique, d'axe au moins sensiblement horizontal et au moins sensiblement perpendiculaire à la direction d'avance (12) au travail.

13. Faucheuse selon les revendications 11 et 12, caractérisée en ce que la deuxième articulation (92) au moyen de laquelle l'organe de rigidification (76) est lié à l'élément d'accouplement (75), est au moins sensiblement confondue avec ladite articulation (83).

14. Faucheuse selon l'une au moins des revendications 1 à 13, caractérisée en ce que la direction de la force d'allégement (84) exercée par le dispositif d'allégement (64) sur ledit mécanisme de récolte (19) est au moins sensiblement tangente à la trajectoire (85) décrite par le point de liaison (83) liant le dispositif d'allégement (64) audit mécanisme de récolte (19), lors de son déplacement en hauteur autorisé par le dispositif de suspension (22).

15. Faucheuse selon l'une au moins des revendications 1 à 14, caractérisée en ce que le dispositif de suspension (22) comporte au moins un organe de suspension (53, 54) liant ledit mécanisme de récolte (19) au châssis (14) et s'étendant sensiblement dans le voisinage du plan vertical (70) contenant le centre des masses dudit mécanisme de récolte (19).

16. Faucheuse selon la revendication 15, caractérisée en ce que le dispositif de suspension (22) comporte au moins deux organes de suspension (53, 54) liés à la partie frontale dudit mécanisme de récolte (19) et s'étendant sensiblement dans le voisinage dudit plan vertical (70).

17. Faucheuse selon l'une au moins des revendications 1 à 16, caractérisée en ce que le dispositif d'allégement (64) comporte un groupe (68) de ressorts (67) dont une partie (69) s'étend d'un côté du plan vertical (70) dirigé suivant la direction d'avance (12) au travail et contenant le centre des masses dudit mécanisme de récolte (19), et dont l'autre partie (69') s'étend de l'autre côté dudit plan (70).

18. Faucheuse selon la revendication 17, caractérisée en ce que les deux parties (69, 69') du groupe (68) de ressorts (67) sont identiques.

19. Faucheuse selon la revendication 18, caractérisée en ce que les deux parties (69, 69') du groupe (68) de ressorts (67) s'étendent au moins sensiblement symétriquement par rapport au plan vertical (70) dirigé suivant la direction d'avance (12) au travail et contenant le centre des masses dudit mécanisme de récolte (19).

20. Faucheuse selon l'une au moins des revendications 17 à 19, caractérisée en ce que tous les ressorts (67) du groupe (68) sont liés à une pièce de liaison commune (72) elle-même liée au châssis (14) au moyen dudit dispositif de réglage (86) permettant d'approcher ou d'éloigner ladite pièce de liaison commune (72) dudit châssis (14).

21. Faucheuse selon la revendication 20, caractérisée en ce que le dispositif de réglage (86) comprend notamment un dispositif à vis et écrou, qui comporte d'une part une vis (77) s'étendant au moins sensiblement parallèment aux ressorts (67) et liée au châssis (14) et d'autre part un écrou (79) lié à la pièce de liaison commune (72).

22. Faucheuse selon la revendication 21, caractérisée en ce que ladite vis (77) comporte une face d'appui sphérique (87) collaborant avec une face d'appui (88) également sphérique du châssis (14).

23. Faucheuse selon la revendication 21 ou 22, caractérisée en ce que l'écrou (79) comporte une face d'appui sphérique (89) collaborant avec une face d'appui (90) également sphérique de la pièce de liaison commune (72).

24. Faucheuse selon la revendication 23, caractérisée en ce que la pièce de liaison commune (72) comporte en son milieu un trou circulaire entouré de ladite face d'appui sphérique (90) dont la concavité est dirigée vers le bas, lequel trou circulaire est traversé par la vis (77).

25. Faucheuse selon l'une au moins des revendications 17 à 24, caractérisée en ce que ledit mécanisme de récolte (19) comprend des éléments d'entraînement (39, 40, 50, 52) qui comportent notamment un arbre d'entrée (39) recevant le mouvement au moyen d'un arbre de transmission télescopique à joints universels (41), qui passe entre les deux parties (69, 69') du groupe (68) de ressorts (67).

26. Faucheuse selon l'une au moins des revendications 1 à 25, caractérisée en ce que le (les) ressort(s) (67) est (sont) un (des) ressort(s) de traction.

27. Faucheuse selon l'une au moins des revendications 1 à 26, caractérisée en ce que ledit mécanisme de récolte (19) comporte en sus des organes (21) de traitement du produit coupé par les organes de coupe (20), qui s'étendent derrière lesdits organes de coupe (20).

28. Faucheuse selon la revendication 27, caractérisée en ce que lesdits organes de traitement (21) comportent deux groupes (150, 151) d'organes de traitement (21) s'étendant de part et d'autre du plan vertical médian (11') dudit mécanisme de récolte (19) dirigé suivant la direction d'avance (12) au travail.

29. Faucheuse selon la revendication 28, caractérisée en ce que ces deux groupes (150, 151) d'organes de traitement (21) s'étendent au moins sensiblement symétriquement par rapport audit plan vertical médian (11').

30. Faucheuse selon la revendication 28 ou 29, caractérisée en ce que le dispositif d'allégement (64) s'étend entre ces deux groupes (150, 151) d'organes de traitement (21).

31. Faucheuse selon l'une au moins des revendications 27 à 30, caractérisée en ce que lesdits organes de traitement (21) sont des organes de conditionnement du produit coupé par les organes de coupe (20).

## Claims

1. A mower (1) comprising:
- a frame (14),
- connection means (4) connecting the said frame (14) to a motor vehicle (2),
- at least one harvesting mechanism (19) equipped with cutter members (20).
- a suspension device (22) connecting the said harvesting mechanism (19) to the frame (14) and arranged in such a way as to draw the said harvesting mechanism (19) along in the direction of advance (12) during work and allowing a displacement in height of the said harvesting mechanism (19) in relation to the said flame (14),
and
- a lightening device (64) connected to the said harvesting mechanism (19), having at least one spring (67) connected directly to the said harvesting mechanism (19) and the lightening force of which may be modulated,
characterised in that the said lightening device (64) extends at least approximately in the vicinity of the vertical plane (70) directed along the direction of advance (12) during work and containing the centre of the masses of the said harvesting mechanism (19), and in that the said lightening device (64) has a central adjusting device (86) for the lightening force (84) exercised on the said harvesting mechanism (19).

2. A mower in accordance with claim 1 characterised in that the lightening device (64) extends behind the cutter members (20) and is connected to the said harvesting mechanism (19) in the vicinity of the cutting plane of the said cutter members (20).

3. A mower in accordance with claim 1 or 2 characterised in that the said harvesting mechanism (19) is provided, in front of the lightening device (64), with two rotors (66) each turning about an upwardly directed axis and in such a way that their respective directions of rotation diverge towards the front.

4. A mower in accordance with one at least of claims 1 to 3 characterised in that the said harvesting mechanism (19) has a cutter bar (48) equipped with the said cutter members (20) and sliding on the ground during work.

5. A mower in accordance with claim 4 characterised in that the cutter members (20) are rotary cutter members turning about upwardly directed axes.

6. A mower in accordance with claim 4 or 5 characterised in that the lightening device (64) is connected to the cutter bar (48) by means of a coupling element (75) extending in the vicinity of the cutting plane of the cutter members (20).

7. A mower in accordance with claim 6 characterised in that the cutter bar (48) is made in two cutter bar parts (81, 82) coupled together by means of the said coupling element (75).

8. A mower in accordance with claim 6 or 7 characterised in that the coupling element (75) is stiffened by means of a stiffening element (76).

9. A mower in accordance with claim 8 characterised in that the stiffening element (76) extends forwards and upwards.

10. A mower in accordance with claim 8 or 9 characterised in that the said harvesting mechanism (19) has in addition carrying elements (40, 65, 93, 49) extending above the said cutter members (20) and in that the stiffening element (76) is placed between the coupling element (75) and the said carrying elements (40, 65, 93, 49).

11. A mower in accordance with claim 10 characterised in that the stiffening element (76) is connected on the one hand to the carrying elements (40, 65, 93, 49) by means of a first articulation (91) extending above the cutter members (20) and on the other hand to the coupling element (75) by means of a second articulation (92).

12. A mower in accordance with one at least of claims 1 to 11 characterised in that the lightening device (64) is connected to the said harvesting mechanism (19) by means of an articulation (83), preferably of the cylindrical type, with an axis at least approximately horizontal and at least approximately perpendicular to the direction of advance (12) during work.

13. A mower in accordance with claims 11 and 12 characterised in that the second articulation (92) by means of which the stiffening element (76) is connected to the coupling element (75), is at least approximately coincident with the said articulation (83).

14. A mower in accordance with one at least of claims 1 to 13 characterised in that the direction of the lightening force (84) exercised by the lightening device (64) on the said harvesting mechanism (19) is at least approximately tangential to the trajectory (85) described by the connection point (83) connecting the lightening device (64) to the said harvesting mechanism (19), at the time of its displacement in height permitted by the suspension device (22).

15. A mower in accordance with one at least of claims 1 to 14 characterised in that the suspension device (22) has at least one suspension element (53, 54) connecting the said harvesting mechanism (19) to the frame (14) and extending approximately in the vicinity of the vertical plane (70) containing the centre of the masses of the said harvesting mechanism (19).

16. A mower in accordance with claim 15 characterised in that the suspension device (22) has at least two suspension elements (53, 54) connected to the front part of the said harvesting mechanism (19) and extending approximately in the vicinity of the said vertical plane (70).

17. A mower in accordance with one at least of claims 1 to 16 characterised in that the lightening device (64) has a group (68) of springs (67) of which one part (69) extends on one side of the vertical plane (70) directed along the direction of advance (12) during work and containing the centre of the masses of the said harvesting mechanism (19), and of which the other part (69') extends on the other side of the said plane (70).

18. A mower in accordance with claim 17 characterised in that the two parts (69, 69') of the group (68) of springs (67) are identical.

19. A mower in accordance with claim 18 characterised in that the two parts (69, 69') of the group (68) of springs (67) extend at least approximately symmetrically in relation to the vertical plane (70) directed along the direction of advance (12) during work and containing the centre of the masses of the said harvesting mechanism (19).

20. A mower in accordance with one at least of claims 17 to 19 characterised in that all the springs (67) of the group (68) are connected to one common connecting piece (72) itself connected to the frame (14) by means of the said adjusting device (86) permitting the said common connecting piece (72) to be brought closer to or distanced from the said frame (14).

21. A mower in accordance with claim 20 characterised in that the adjusting device (86) has in particular a screw and nut device which has on the one hand a screw (77) extending at least approximately parallel to the springs (67) and connected to the frame (14) and on the other hand a nut (79) connected to the common connecting piece (72).

22. A mower in accordance with claim 21 characterised in that the said screw (77) has a spherical support face (87) cooperating with a support face (88), also spherical, of the frame (14).

23. A mower in accordance with claim 21 or 22 characterised in that the nut (79) has a spherical support face (89) working with a support face (90), also spherical, of the common connecting piece (72).

24. A mower in accordance with claim 23 characterised in that the common connecting piece (72) has at its midpoint a circular hole surrounded by the said spherical support face (90) whose concavity is directed downwards, this circular hole being passed through by the screw (77).

25. A mower in accordance with one at least of claims 17 to 24 characterised in that the said harvesting mechanism (19) has drive members (39, 40, 50, 52) which have in particular an input shaft (39) receiving the movement by means of a telescopic transmission shaft with universal joints (41) which passes between the two parts (69, 69') of the group (68) of springs (67).

26. A mower in accordance with one at least of claims 1 to 25 characterised in that the spring or springs (67) is a, or are, traction spring(s).

27. A mower in accordance with one at least of claims 1 to 26 characterised in that the said harvesting mechanism (19) has in addition elements (21) for treating the product cut by the cutter members (20), which extend behind the said cutter members (20).

28. A mower in accordance with claim 27 characterised in that the said treatment elements (21) have two groups (150, 151) of treatment elements (21) extending on either side of the median vertical plane (11') of the said harvesting mechanism (19) directed along the direction of advance (12) during work.

29. A mower in accordance with claim 28 characterised in that these two groups (150, 151) of treatment elements (21) extend at least approximately symmetrically in relation to the said median vertical plane (11').

30. A mower in accordance with claim 28 or 29 characterised in that the lightening device (64) extends between these two groups (150, 151) of treatment elements (21).

31. A mower in accordance with one at least of claims 27 to 30 characterised in that the said treatment elements (21) are elements for conditioning the product cut by the cutter members (20).

## Patentansprüche

1. Mähmaschine (1) umfassend:
- einen Rahmen (14),
- ein Verbindungsmittel (4), das diesen Rahmen (14) mit einem Motorfahrzeug (2) verbindet,
- mindestens einen Erntemechanismus (19), der mit Schneidorganen (20) versehen ist,
- eine Aufhängevorrichtung (22), die den Erntemechanismus (19) mit dem Rahmen (14) verbindet und in der Weise angeordnet ist, um den Erntemechanismus (19) in Arbeitsvorschubrichtung (12) zu ziehen, und eine Höhenversetzung des Erntemechanismus (19) in bezug auf den Rahmen (14) zu gestatten, und
- eine Entlastungseinrichtung (64), die dem Erntemechanismus (19) zugeordnet ist und mindestens eine Feder (67) aufweist, die direkt mit dem Erntemechanismus (19) verbunden ist und deren Entlastungskraft verändert werden kann,
dadurch gekennzeichnet, dass die Entlastungseinrichtung (64) sich zumindest im wesentlichen in der Nähe der Vertikalebene (70), die in Arbeitsvorschubrichtung (12) gerichtet ist und den Schwerpunkt dieses Erntemechanismus (19) enthält, erstreckt und dass die Entlastungseinrichtung (64) eine zentrale Einstellvorrichtung (86) für die Entlastungskraft (84), die auf den Erntemechanismus (19) ausgeübt wird, aufweist.

2. Mähmaschine nach Anspruch 1, dadurch gekennzeichnet, dass die Entlastungseinrichtung (64) sich hinter den Schneidorganen (20) erstreckt und mit dem Erntemechanismus (19) in der Nähe der Schneidebene der Schneidorgane (20) verbunden ist.

3. Mähmaschine nach Anspruch 1 oder 2, dadurch gekennzeichnet, dass der Erntemechanismus (19) vor der Entlastungseinrichtung (64) mit zwei Rotoren (66) versehen ist, die jeweils um eine nach oben gerichtete Achse drehen und in einer solchen Weise, dass ihre entsprechenden Drehrichtungen nach vorne divergieren.

4. Mähmaschine nach mindesten einem der Ansprüche 1 bis 3, dadurch gekennzeichnet, dass der Erntemechanismus (19) einen Mähbalken (48) aufweist, der mit den Schneidorganen (20) versehen ist und im Betrieb auf dem Boden gleitet.

5. Mähmaschine nach Anspruch 4, dadurch gekennzeichnet, das die Schneidorgane (20) rotierende Schneidorgane sind, die um nach oben gerichtete Achsen drehen.

6. Mähmaschine nach Anspruch 4 oder 5, dadurch gekennzeichnet, dass die Entlastungseinrichtung (64) mit dem Mähblaken (48) mittels eines Kupplungselementes (75) verbunden ist, das sich in der Nähe der Schneidebene der Schneidorgane (20) erstreckt.

7. Mähmaschine nach Anspruch 6, dadurch gekennzeichnet, dass der Mähbalken (48) aus zwei Mähbalkenteilen (81, 82) besteht, die miteinander mittels dieses Kupplungselementes (75) gekuppelt sind.

8. Mähmaschine nach Anspruch 6 oder 7, dadurch gekennzeichnet, dass das Kupplungselement (75) mittels eines Versteifungsorganes (76) versteift ist.

9. Mähmaschine nach Anspruch 8, dadurch gekennzeichnet, dass das Versteifungsorgan (76) sich nach vorne und nach oben erstreckt.

10. Mähmaschine nach Anspruch 8 oder 9, dadurch gekennzeichnet, dass der Erntemechanismus (19) noch Tragelemente (40, 65, 93, 49) aufweist, die sich oberhalb der Schneidorgane (20) erstrecken und dass das Versteifungsorgan (76) zwischen dem Kupplungselement (75) und den Tragelementen (40, 65, 93, 49) angeordnet ist.

11. Mähmaschine nach Anspruch 10, dadurch gekennzeichnet, dass das Verteilungsorgan (76) einerseits mit den Tragelementen (40, 65, 93, 49) mittels eines ersten Gelenks (91), das sich oberhalb der Schneidorgane (20) erstreckt, und anderseits mit dem Kupplungselement (75) mittels eines zweiten Gelenks (92) verbunden ist.

12. Mähmaschine nach mindestens einem der Ansprüche 1 bis 11, dadurch gekennzeichnet, dass die Entlastungseinrichtung (64) mit dem Erntemechanismus (19) mittels eines vorzugsweise zylindrischen Gelenks (83), mit einer zumindest im wesentlichen horizontalen und zumindest im wesentlichen zur Arbeitsvorschubrichtung (12) senkrechten Achse verbunden ist.

13. Mähmaschine nach den Ansprüchen 11 und 12, dadurch gekennzeichnet, dass das zweite Gelenk (92), mittels welchem das Versteifungsorgan (76) mit dem Kupplungselement (75) verbunden ist, zumindest im wesentlichen mit dem Gelenk (83) zusammenfällt.

14. Mähmaschine nach mindestens einem der Ansprüche 1 bis 13, dadurch gekennzeichnet, dass die Richtung der durch die Entlastungseinrichtung (64) auf den Erntemechanismus (19) ausgeübten Entlastungskraft (84) zumindest im wesentlichen tangential zur Bahn (85) ist, die vom Punkt des Gelenks (83), das die Entlastungseinrichtung (64) mit dem Erntemechanismus (19) verbindet, bei der durch die Aufhängevorrichtung (22) gestatteten Höhenversetzung des Erntemechanismus (19) beschrieben wird.

15. Mähmaschine nach mindestens einem der Ansprüche 1 bis 14, dadurch gekennzeichnet, dass die Aufhängevorrichtung (22) mindestens ein Aufhängungsorgan (53, 54) aufweist, das den Erntemechanismus (19) mit dem Rahmen (14) verbindet und sich im wesentlichen in der Nähe der Vertikalebene (70) erstreckt, die den Schwerpunkt des Erntemechanismus (19) enthält.

16. Mähmaschine nach Anspruch 15, dadurch gekennzeichnet, dass die Aufhängevorrichtung (22) mindestens zwei Aufhängungsorgane (53, 54) aufweist, die mit dem Frontteil des Erntemechanismus (19) verbunden sind und sich im wesentlichen in der Nähe der Vertikalebene (70) erstrecken.

17. Mähmaschine nach mindestens einem der Ansprüche 1 bis 16, dadurch gekennzeichnet, dass die Entlastungsvorrichtung (64) eine Gruppe (68) von Federn (67) aufweist, von denen sich ein Teil (69) auf einer Seite der Vertikalebene (70) erstreckt, die in Arbeitsvorschubrichtung (12) gerichtet ist und den Schwerpunkt des Erntemechanismus (19) enthält, und von denen sich der andere Teil (69') auf der anderen Seite dieser Ebene (70) erstreckt.

18. Mähmaschine nach Anspruch 17, dadurch gekennzeichnet, dass die zwei Teile (69, 69') der Gruppe (68) von Federn (67) gleich sind.

19. Mähmaschine nach Anspruch 18, dadurch gekennzeichnet, dass die zwei Teile (69, 69') der Gruppe (68) von Federn (67) sich zumindest im wesentlichen symmetrisch zur Vertikalebene (70) erstrecken, die in Arbeitsvorschubrichtung (12) gerichtet ist und den Schwerpunkt des Erntemechanismus (19) enthält.

20. Mähmaschine nach mindestens einem der Ansprüche 17 bis 19, dadurch gekennzeichnet, dass alle Federn (67) der Gruppe (68) mit einem gemeinsamen Berbindungsstück (72) verbunden sind, das selbst mit dem Rahmen (14) mittels der Einstellvorrichtung (86) verbunden ist, die das Annähern oder Entfernen des gemeinsamen Verbindungsstückes (72) gegenüber dem Rahmen (14) gestattet.

21. Mähmaschine nach Anspruch 20, dadurch gekennzeichnet, dass die Einstellvorrichtung (86) insbesondere eine Vorrichtung mit Schraube und Mutter umfasst, die einerseits eine Schraube (77), die sich zumindest im wesentlichen parallel zu den Federn (67) erstreckt und mit dem Rahmen (14) verbunden ist, und anderseits eine Mutter (79), die mit dem gemeinsamen Verbindungsstück (72) verbunden ist, aufweist.

22. Mähmaschine nach Anspruch 21, dadurch gekennzeichnet, dass die Schraube (77) eine sphärische Anlagefläche (87) aufweist, die mit einer ebenfalls sphärischen Anlagefläche (88) des Rahmens (14) zusammenarbeitet.

23. Mähmaschine nach Anspruch 21 oder 22, dadurch gekennzeichnet, dass die Mutter (79) eine sphärische Anlagefläche (89) aufweist, die mit einer ebenfalls sphärischen Anlagefläche (90) des gemeinsamen Verbindungsstückes (72) zusammenarbeitet.

24. Mähmaschine nach Anspruch 23, dadurch gekennzeichnet, dass das gemeinsame Verbindungsstück (72) in seiner Mitte ein rundes Loch aufweist, das von dieser sphärischen Anlagefläche (90) umgeben ist, deren Konkavität nach unten gerichtet ist, und welches runde Loch von der Schraube (77) durchsetzt wird.

25. Mähmaschine nach mindestens einem der Ansprüche 17 bis 24, dadurch gekennzeichnet, dass der Erntemechanismus (19) Antriebselemente (39, 40, 50, 52) aufweist, die insbesondere eine Eingangswelle (39) umfassen, die die Bewegung mittels einer teleskopischen Kardanwelle (41) aufnimmt, die zwischen den zwei Teilen (69, 69') der Gruppe (68) von Federn (67) verläuft.

26. Mähmaschine nach mindestens einem der Ansprüche 1 bis 25, dadurch gekennzeichnet, dass die Feder(n) (67) eine Zugfeder (Zugfedern) ist (sind).

27. Mähmaschine nach mindestens einem der Ansprüche 1 bis 26, dadurch gekennzeichnet, dass der Erntemechanismus (19) für das durch die Schneidorgane (20) geschnittene Gut noch Behandlungsorgane (21) aufweist, die sich hinter den Schneidorganen (20) erstrecken.

28. Mähmaschine nach Anspruch 27, dadurch gekennzeichnet, dass die Behandlungsorgane (21) zwei Gruppen (150, 151) von Behandlungsorganen (21) aufweisen, die sich beidseits der vertikalen Mittelebene (11') des Erntemechanismus (19), die in Arbeitsvorschubrichtung (12) ausgerichtet ist, erstrecken.

29. Mähmaschine nach Anspruch 28, dadurch gekennzeichnet, dass die zwei Gruppen (150, 151) von Behandlungsorganen (21) sich zumindest im wesentlichen symmetrisch in bezug auf die vertikale Mittelebene (11') erstrecken.

30. Mähmaschine nach Anspruch 28 oder 29, dadurch gekennzeichnet, dass die Entlastungseinrichtung (64) sich zwischen diesen zwei Gruppen (150, 151) von Behandlungsorganen (21) erstreckt.

31. Mähmaschine nach mindestens einem der Ansprüche 27 bis 30, dadurch gekennzeichnet, dass die Behandlungsorgane (21) Konditionierorgane für das durch die Schneidorgane (20) geschnittene Gut sind.
